# EUROPÄISCHE PATENTSCHRIFT

(11) **EP 3 283 346 B1**
(45) Veröffentlichungstag und Bekanntmachung des Hinweises auf die Patenterteilung: **11.11.2020**
(21) Anmeldenummer: 16724379.9
(22) Anmeldetag: 18.05.2016
(51) Int. Cl.: B61D 35/00, B61D 27/00

(54) **NASSZELLE FÜR EIN SCHIENENFAHRZEUG**
WET ROOM FOR A RAIL VEHICLE
BLOC SANITAIRE POUR VÉHICULE FERROVIAIRE

(30) Priorität: 09.06.2015 DE 102015210475
(43) Veröffentlichungstag der Anmeldung: 21.02.2018
(73) Patentinhaber: Siemens Mobility GmbH, 81739 München (DE)
(72) Erfinder: SCHNEIDER, Christian, 46535 Dinslaken (DE); WIEGNER, Rainer, 32139 Spenge (DE)
(86) Internationale Anmeldenummer: PCT/EP2016/061155
(87) Internationale Veröffentlichungsnummer: WO 2016/198244

(56) Entgegenhaltungen:
- EP-A2- 1 318 049
- WO-A1-94/06663
- CN-A- 102 765 401
- DE-B3-102013 219 646
- DE-U1- 29 820 581

## Beschreibung

Die Erfindung betrifft eine Nasszelle für ein Schienenfahrzeug, welche mindestens ein Leuchtmittel und/oder einen Lichteinlass sowie einen Innenraum umfasst, der zumindest teilweise durch eine Decke, einen Boden und mindestens eine Seitenwand begrenzt ist.

Nasszellen in Schienenfahrzeugen müssen eine Vielzahl an Komfortbedingungen erfüllen und sich stets in einem hygienisch einwandfreien Zustand befinden. Zu diesen Komfortbedingungen gehört neben einer hinreichenden Beleuchtung insbesondere das Vorliegen einer bestimmten Raumtemperatur innerhalb der Nasszelle. Ist die Nasszelle in einem Schienenfahrzeug verbaut, so darf oder soll die Raumtemperatur nicht unterhalb der im Rest des Schienenfahrzeuges gegebenen Temperatur liegen, sondern sollte im Gegenteil einen Wert leicht oberhalb dieser Temperatur aufweisen. Beispielsweise sollen Nasszellen in Hochgeschwindigkeitszügen mit Wickeltisch mindestens gleich warm sein, wie der Fahrgastraum, aber nur maximal 4 Kelvin wärmer. Andere Nasszellen in Hochgeschwindigkeitszügen oder alle Nasszellen in anderen Zügen sollen maximal 6 Kelvin wärmer sein, als der Fahrgastraum. Nasszellen in Zügen stehen jedoch oftmals nicht im Fahrgastraum, sondern in einem Vorraum, der kälter als der Fahrgastraum sein darf. Daher müssen die Nasszellen oft wärmer als der Bereich sein, in dem sie stehen. Ferner ist für das Wohlbefinden des Fahrgastes auch der positive Gesamteindruck der Nasszelle sehr wichtig, zu welchem neben hygienisch sauberen Oberflächen innerhalb der Nasszelle auch eine möglichst geringe Geruchsbelastung ihren Beitrag leistet.

Eine gattungsgemäße Nasszelle ist beispielsweise in der WO 94/06663 A1 beschrieben.

Als Beleuchtungselemente kommen in Nasszellen Halogenlampen, Leuchtstoffröhren oder LED-Leuchten, womöglich sogar OLED-Leuchten, zum Einsatz. Es sind auch Nasszellen denkbar, in welchen die Beleuchtung indirekt, beispielsweise über einen Lichteinlass wie ein Fenster oder eine Luke erfolgt. Zur Beheizung der Nasszelle auf den oben erwähnten Temperaturwert kommen oftmals Flächenheizkörper oder Umluftheizer, zur Anwendung. Wird ein Flächenheizer eingesetzt, kann dieser auch als sogenanntes Nasszellenwandelelement ausgeführt werden. Der Konvektionsheizer hingegen kann in einer kompakten Bauform realisiert werden, beispielsweise als sogenannter Kanalheizer und ein Heizelement sowie einen Lüfter umfassen. Bei einem solchen Kanalheizer wird Luft über eine Ansaugöffnung in einen Umluftkanal angesaugt, passiert dann ein die Luft aufheizendes Heizelement und wird anschließend über eine Ausblasöffnung wieder ausgeblasen.

Um die Ausbreitung unangenehmer Gerüche im Schienenfahrzeug zu verhindern, wird in der Nasszelle ein einen Luftauslass für Fortluft umfassendes Fortluftsystem verbaut, welches permanent einen leichten Unterdruck in der Nasszelle bewirkt, so dass eine Luftströmung immer vom Vorraum/Fahrgastraum in die Nasszelle und nicht in umgekehrter Richtung erfolgt. Zur Erzeugung dieses Unterdrucks wird kontinuierlich Luft aus dem Innenraum der Nasszelle ausgestoßen. Eine von der Nasszelle ausgehende Ausbreitung von unangenehmen Gerüchen im Fahrzeug wird somit unterbunden. Allerdings geht dadurch auch ein nicht unwesentlicher Teil der erhitzen Luft als Fortluft verloren, wodurch die Energieeffizienz der Nasszelle unnötig reduziert wird.

Druckschrift CN 102 765 401 A1 offenbart eine Toilettenschüssel mit einer photokatalytischen Oberflächenbeschichtung zur Selbstreinigung der Toilette bei Bestrahlung mit UV-Licht. Am Toilettendeckel ist eine entsprechende UV-Licht-Lampe angebracht.

Der Erfindung liegt nun die Aufgabe zugrunde, eine Nasszelle für ein Schienenfahrzeug zur Verfügung zu stellen, welche zur Erfüllung unter anderem der oben erwähnten Komfortbedingungen in der Lage ist bei gleichzeitiger Steigerung der Energieeffizienz der Nasszelle gegenüber dem Stand der Technik.

Es wird eine Nasszelle für ein Schienenfahrzeug zur Verfügung gestellt, welche einen Innenraum umfasst, welcher zumindest teilweise durch eine Decke, einen Boden und mindestens eine Seitenwand begrenzt ist. Die Nasszelle weist ferner mindestens ein Leuchtmittel und/oder einen Lichteinlass auf. Erfindungsgemäß umfasst die Nasszelle ein photokatalytisches Element, welches dazu eingerichtet ist, bei Aktivierung mittels Licht luftreinigende Stoffe freizusetzen. Das photokatalytische Element wird also durch auf das Element treffendes Licht aktiviert, wobei es bei vermehrtem Lichteinfall, etwa bei höherer Lichtintensität, mehr luftreinigende Stoffe freisetzt, als bei geringerem oder ohne Lichteinfall.

Dabei ist das photokatalytische Element als Seiten- oder Deckenelement ausgeführt und zwischen dem mindestens einen Leuchtmittel und/oder dem mindestens einen Lichteinlass und dem Innenraum der Nasszelle angebracht, so dass Licht des mindestens einen Leuchtmittels und/oder des mindestens einen Lichteinlasses zur Beleuchtung des Innenraums unmittelbar auf das photokatalytische Element einstrahlt. Das photokatalytische Element ist in dieser Ausführungsform seinerseits vorteilhaft transparent oder im Wesentlichen lichtdurchlässig ausgebildet oder es weist Öffnungen auf, durch welche das Licht des mindestens einen Leuchtmittels und/oder des mindestens einen Lichteinlasses zur Beleuchtung des Innenraums in den Innenraum hindurchtreten kann. Der so entstehende Zwischenraum zwischen dem photokatalytischen Element dem mindestens einen Leuchtmittel und/oder dem mindestens einen Lichteinlass kann hierbei zur Führung des Luftstroms einer Lüftungs- oder Klimaanlage, insbesondere des Umluftelements, dienen.

Eine derartige Nasszelle ermöglicht das Volumen an aus der Nasszelle herausgeführter Luft erheblich zu reduzieren und gleichzeitig die an die Geruchsbelastung im Innenraum beziehungsweise die an die Hygiene des Innenraums der Nasszelle gestellten Anforderungen zu erfüllen. Das photokatalytische Element setzt bei Bestrahlung mit Licht Stoffe beziehungsweise Radikale frei, welche Gerüche, Viren, Bakterien und Keime aus der Luft zersetzen. Somit kann eine Reinigung der Luft erfolgen, ohne dass größere Luftvolumina mit der Umgebung der Nasszelle ausgetauscht werden müssen, so dass im Vergleich zum Stand der Technik ein geringerer Betrag an Heizenergie zur Erreichung und Beibehaltung der geforderten Temperatur in der Nasszelle von Nöten ist.

Ferner bevorzugt umfasst die Nasszelle ein photokatalytisches Element, welches dazu eingerichtet ist, bei Aktivierung mittels Licht luftreinigende Radikale freizusetzen.

In einer bevorzugten Ausführungsform ist das photokatalytische Element derart innerhalb der Nasszelle angeordnet, dass es mit Licht des Leuchtmittels bestrahlbar ist und/oder von über den Lichteinlass in die Nasszelle einfallendem Licht bestrahlt wird. Bei einer derartigen Ausführungsform wird das photokatalytische Element immer dann aktiviert, wenn Licht des Leuchtmittels oder durch den Lichteinlass einfallendes Licht auf das photokatalytische Element fällt. Somit wird das photokatalytische Element im Regelfall genau dann aktiviert, wenn die Nasszelle in Anspruch genommen wird. Eine dauerhafte Beleuchtung des photokatalytischen Elementes ist daher nicht notwendig. Selbst wenn das photokatalytische Element dauerhaft beleuchtet wird, nutzt es sich hierdurch nicht ab.

Vorzugsweise umfasst das photokatalytische Element photokatalytisches Titandioxid, welches bei einer Aktivierung durch Licht reaktiven Sauerstoff freisetzt. Besonders bevorzugt umfasst das photokatalytische Element mit Silber dotiertes photokatalytisches Titandioxid. Bei einer derartigen Ausführungsform weist das Licht, welches mittels des mindestens einen Leuchtmittels emittierbar ist oder welches durch den Lichteinlass eingelassen wird bevorzugt eine Wellenlänge A auf, welche geringer oder gleich 400 nm ist. Ferner bevorzugt weist das Licht, welches mittels des mindestens einen Leuchtmittels emittierbar ist oder welches durch den Lichteinlass eingelassen wird und auf das photokatalytische Element trifft, eine Intensität I auf, welche größer oder gleich 100 Lux ist. Bei einer Intensität kleiner als 100 Lux wäre die Oberfläche des photokatalytischen Elementes zu vergrößern, um den gleichen Effekt zu erzielen, wie ein mit mindestens 100 Lux beleuchtetes photokatalytisches Element.

Photokatalytisches Titandioxid weist eine Vielzahl an Vorzügen auf, welche insbesondere im Bereich der Hygienisierung, Desinfektion, Luftreinigung, Selbstreinigung sowie der Geruchsneutralisation zu finden sind. Es wirkt antimikrobiell auf nahezu allen Oberflächen und ist sehr gut dazu geeignet, organische Stoffe, Viren, Keime und Schadgase in ungefährliche Substanzen zu oxidieren.

Bevorzugt umfasst die Nasszelle ferner einen Luftauslass für Fortluft sowie ein Umluftelement, mittels welchem ein Luftstrom innerhalb des Innenraums der Nasszelle erzeugbar ist. Mit einem derartigen Luftauslass lässt sich auf einfache Art und Weise ein Unterdruck innerhalb der Nasszelle erzeugen und aufrecht erhalten, während sich mit dem Umluftelement die Ausbildung einer gewünschten Luftzirkulation im Innenraum der Nasszelle auf vorteilhafte Weise einfach erreichen lässt.

In einer bevorzugten Ausführungsform ist das photokatalytische Element ferner derart innerhalb der Nasszelle angeordnet, dass ein mittels des Umluftelementes erzeugter Luftstrom auf das photokatalytische Element trifft. Bei einer derartigen Ausführung wird der Luftstrom direkt auf das photokatalytische Element geleitet, so dass eine effiziente Reinigung der Luft innerhalb der Nasszelle gewährleistet werden kann. Durch eine günstige Luftführung wird somit ein spezifizierter Volumenstrom an Luft gereinigt.

Vorzugsweise ist das Umluftelement als Umluftheizer ausgeführt, welcher einen Umluftkanal umfasst, wobei über den Umluftkanal eine Ansaugöffnung in der Decke der Nasszelle mit einer Ausblasöffnung im Boden oder in der mindestens einen Seitenwand der Nasszelle luftleitend verbunden ist. Bevorzugt weist der Umluftkanal ein Heizelement auf. Besonders bevorzugt weist der Umluftkanal ferner einen Lüfter auf, mit welchem Luft angesaugt oder ausgeblasen werden kann. In einer solchen Ausführung kann gereinigte Luft von der Decke in einem unteren Bereich der Nasszelle wieder in selbige eingespeist und gleichzeitig auf eine vorbestimmte Temperatur erwärmt werden.

In einer bevorzugten Ausführungsform umfasst das photokatalytische Element ein Kunststoffelement, welches mit einer photokatalytischen Beschichtung versehen ist. Bevorzugt weist die Beschichtung eine Dicke d von d ≤ 0,4 µm auf. In einer derartigen Ausführungsform trocknet die Beschichtung nach der Auftragung sehr schnell auf dem Kunststoffelement. Kunststoffelemente sind einfach, in großer Zahl und kostengünstig erhältlich.

Vorzugsweise ist das Kunststoffelement transparent oder im Wesentlichen lichtdurchlässig. In einer derartigen Ausführungsform kann das Kunststoffelement beispielsweise direkt vor oder in unmittelbarer Nähe zu dem mindestens einen Leuchtmittel beziehungsweise Lichteinlass innerhalb der Nasszelle angebracht werden. Dies ermöglicht die zuverlässige Aktivierung des photokatalytischen Elementes bei gleichzeitiger Gewährleistung einer hinreichenden Ausleuchtung der Nasszelle.

Bevorzugt weist das photokatalytische Element die Form einer Platte auf. Eine solche Platte lässt sich sehr gut in den Aufbau einer Nasszelle integrieren.

In einer bevorzugten Ausführungsform ist die Platte an mindestens zwei Seiten jeweils mit der photokatalytischen Beschichtung versehen. Besonders bevorzugt ist die Platte an mindestens zwei einander gegenüberliegenden Seiten jeweils mit der photokatalytischen Beschichtung versehen. In einer derartigen Ausführungsform wirkt das photokatalytische Element besonders effizient da zum Einen auch reflektiertes, also lediglich indirekt eingestrahltes Licht zu einer Aktivierung des photokatalytischen Elementes führt und zum Anderen der Luftstrom unmittelbar mit der photokatalytischen Beschichtung konfrontiert wird.

Vorzugsweise ist das photokatalytische Element als Deckenelement ausgeführt und in oder unmittelbar unterhalb der Decke der Nasszelle angebracht. Bevorzugt handelt es sich bei dem Deckenelement um ein Verkleidungsteil, welches im Innenraum der Nasszelle angebracht ist. Als Deckenelement ausgeführt nimmt ein Nutzer der Nasszelle das Vorhandensein des photokatalytische Elementes nicht wahr. Des Weiteren befindet sich ein in oder unmittelbar unterhalb der Decke der Nasszelle angebrachtes Deckenelement auch in unmittelbarer Nähe zu der Ansaugöffnung und somit innerhalb des mittels des Umluftelementes erzeugbaren Luftstroms, was die Effizienz der Luftreinigung im Innenraum der Nasszelle verbessert.

Bevorzugt ist das mindestens eine Leuchtmittel in der Decke oder unmittelbar unterhalb der Decke der Nasszelle angebracht. Ferner bevorzugt ist das Leuchtmittel in einer Wand, insbesondere in einer Seitenwand oder in einer Spiegelschrankkombination der Nasszelle angebracht. In einer derartigen Ausführungsform strahlt ein im Betrieb befindliches Leuchtmittel sein Licht unmittelbar in das photokatalytische Element ein.

Es wird ferner einen Schienenfahrzeug mit einer erfindungsgemäßen Nasszelle zur Verfügung gestellt. In einer derartigen Ausführung kommen die zuvor genannten Vorteile in einem Schienenfahrzeug zum Tragen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein erstes schematisches Ausführungsbeispiel einer Nasszelle für ein Schienenfahrzeug, und
- Figur 2: ein zweites Ausführungsbeispiel einer Nasszelle für ein Schienenfahrzeug.

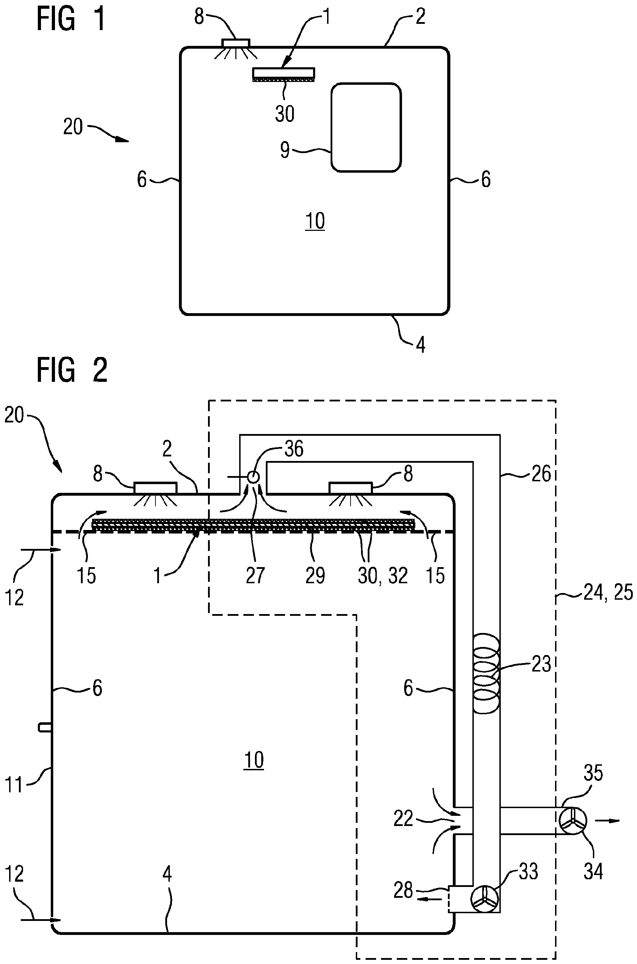

Figur 1 zeigt ein erstes schematisches Ausführungsbeispiel einer erfindungsgemäßen Nasszelle 20 für ein Schienenfahrzeug. Die Nasszelle 20 umfasst einen Innenraum 10, welcher in diesem ersten Ausführungsbeispiel rein beispielhaft durch eine Decke 2, einen Boden 4 und vier Seitenwände 6 begrenzt ist. In diesem ersten Ausführungsbeispiel umfasst die Nasszelle 20 ein Leuchtmittel 8, welches in diesem ersten Ausführungsbeispiel rein beispielhaft als Halogenlampe ausgeführt und an der Decke 2 der Nasszelle 20 montiert ist. Es können allerdings auch erfindungsgemäße Nasszellen 20 mit mehr als einem und auch anderen Leuchtmitteln 8 realisiert werden, welche auch andernorts innerhalb der erfindungsgemäßen Nasszelle 20 positioniert sein können. So können in einer erfindungsgemäßen Nasszelle 20 beispielsweise auch Leuchtstoffröhren, Leuchtdioden (LED), Projektionsleuchten oder Gasentladungslampen zur Anwendung gelangen, welche beispielsweise auch in einer Seitenwand 6 oder gar im Boden 4 der Nasszelle 20 oder in einem anderen innerhalb der Nasszelle 20 angeordneten Bau- oder Verkleidungsteil verbaut sein können. Es können ferner auch erfindungsgemäße Nasszellen 20 ausgeführt werden, bei welchen kein Leuchtmittel verbaut beziehungsweise vorgesehen ist, sondern welche lediglich einen Lichteinlass 9 aufweisen. Dabei wird unter einem Lichteinlass 9 jegliche Öffnung innerhalb der Nasszelle 20 verstanden, durch welche Licht von außerhalb der Nasszelle 20 in den Innenraum 10 derselben einzudringen in der Lage ist. In diesem ersten Ausführungsbeispiel ist ein Lichteinlass 9 rein beispielhaft in Form eines Milchglasfensters in einer der Seitenwände 6 der Nasszelle 20 gegeben. Ein Lichteinlass 9 kann aber beispielsweise auch in Form eines Öffnungsschlitzes in der Decke 2, in einer der Seitenwände 6 oder im Boden 4 der Nasszelle 20 gegeben sein.

Die Nasszelle 20 weist ferner ein photokatalytisches Element 1 auf, welches bei Aktivierung mittels Licht luftreinigende Stoffe freisetzt. In diesem ersten Ausführungsbeispiel umfasst das photokatalytische Element 1 ein Trägermedium, welches mit einer photokatalytischen Beschichtung 30 versehen ist, welche bei Aktivierung mittels Licht den luftreinigenden Stoff freisetzt. Allerdings können auch anders aufgebaute photokatalytische Elemente 1 innerhalb erfindungsgemäßer Nasszellen 20 realisiert werden. Zum Beispiel kann der Lichteinlass selbst mit dem photokatalytischen Element 1 beschichtet sein. Ferner kann beispielsweise ein photokatalytisches Element 1 auch ausschließlich aus der genannten photokatalytischen Beschichtung 30 bestehen oder einen massiven photokatalytischen Feststoff mit der genannten luftreinigenden Eigenschaft umfassen. Unter einer Aktivierung mittels Licht wird eine Bestrahlung mit Licht beziehungsweise eine Anregung durch Licht verstanden. Das zur Aktivierung verwandte Licht kann dabei von einer künstlichen Lichtquelle, wie beispielsweise dem Leuchtmittel 8 der Nasszelle 20 emittiert werden, aber auch durch den Lichteinlass 9 auf das photokatalytische Element 1 auffallen.

In diesem ersten Ausführungsbeispiel umfasst die photokatalytische Beschichtung 30 rein beispielhaft photokatalytisches Titandioxid, welches bei einer Aktivierung durch Licht reaktiven Sauerstoff beziehungsweise Sauerstoffradikale freisetzt. Mit anderen Worten ausgedrückt, reinigt die Beschichtung die Luft über einen photokatalytischen Effekt, bei welchem in diesem ersten Ausführungsbeispiel auf der Schicht Sauerstoffradikale erzeugt werden, welche Gerüche, Viren, Bakterien und Keime aus der Luft zersetzen. Dabei wird für die Aktivierung der Schicht in diesem ersten Ausführungsbeispiel rein beispielhaft Licht mit einer Wellenlänge λ ≤ 400 nm und einer Intensität I ≥ 100 Lux benötigt. Liegt die Intensität unter 100 Lux, wäre die Oberfläche der photokatalytischen Beschichtung 30 zu vergrößern, um den gleichen Effekt zu erzielen, wie eine mit mindestens 100 Lux beleuchtete photokatalytische Beschichtung 30. In diesem ersten Ausführungsbeispiel ist das Leuchtmittel 8 zur Emission derartigen Lichtes in der Lage. Somit kann das zur Aktivierung des photokatalytischen Elementes 1 benötigt Licht von der Lichtquelle 8 bereitgestellt werden.

Es können allerdings auch andere photokatalytische Elemente 1, photokatalytische Stoffe beziehungsweise Beschichtungen zum Einsatz kommen, welche auch durch anderes Licht beziehungsweise durch Licht mit anderen Eigenschaften und Charakteristika aktivierbar sind.

Figur 2 zeigt ein zweites Ausführungsbeispiel einer erfindungsgemäßen Nasszelle 20 für ein Schienenfahrzeug. Genauer beschrieben handelt es sich bei der in Figur 2 dargestellten Nasszelle 20 um ein in einem Schienenfahrzeug verbautes WC, welches eine Vielzahl an in Figur 2 nicht dargestellten Ausstattungselementen wie beispielsweise einem Waschbecken sowie Rohrleitungen umfasst. Die Nasszelle 20 umfasst einen Innenraum 10, welcher in diesem Ausführungsbeispiel rein beispielhaft durch eine Decke 2, einen Boden 4 und vier Seitenwände 6 begrenzt ist. Innerhalb einer der Seitenwände 6 ist eine Tür 11 vorgesehen, welche beispielsweise von einem Nutzer der Nasszelle 20 öffen- und schließbar ist und über welche ein Nutzer in den Innenraum 10 der Nasszelle 20 gelangen kann. Im verschlossenen Zustand der Tür 11 vermag Licht von außerhalb der Nasszelle 20 über zwei Türspalte 12 in den Innenraum 10 der Nasszelle 20 einzudringen. Die Türspalte 12 werden in diesem zweiten Ausführungsbeispiel rein beispielhaft zwischen der Tür 11 und der Seitenwand 6 gebildet, in welcher die Tür 11 angeordnet ist. Alternativ kann die Luftzufuhr beispielsweise durch Lüftungsschlitze in Form eines Lüftungsgitters in der Tür 11 realisiert sein. Während einer der Türspalte 12 an dem der Decke 2 der Nasszelle 20 zugewandten Ende der Tür 11 zwischen der Tür 11 und der Seitenwand 6 gebildet wird, befindet sich der andere Türspalt 12 an dem Boden 4 der Nasszelle 20 zugewandten Ende der Tür 11 zwischen der Tür 11 und der Seitenwand 6. Die Türspalte 12 stellen jeder für sich einen Lichteinlass 9 dar, welche in anderen Ausführungsbeispielen auch andernorts in der Nasszelle 20 vorgesehen sein können, aber nicht vorgesehen sein müssen. Durch die Türspalte 12 vermag selbstverständlich auch Luft von dem Außenraum der Nasszelle 20 in den Innenraum 10 derselben einzudringen. An der Tür 11 ist eine in Figur 2 schwarz dargestellte Türklinke angebracht, mittels welcher sich die Tür 11 öffnen und schließen lässt.

In diesem zweiten Ausführungsbeispiel umfasst die Nasszelle 20 rein beispielhaft zwei Leuchtmittel 8, welche in diesem zweiten Ausführungsbeispiel rein beispielhaft jeweils als LED-Leuchten ausgeführt und an der Decke 2 der Nasszelle 20 montiert sind. Im Betriebszustand, beispielsweise bei Beanspruchung der Nasszelle 20 durch einen Nutzer, kann mittels der beiden Leuchtmittel 8 Licht in den Innenraum 10 der Nasszelle 20 eingestrahlt werden. Dabei wird der gesamte Innenraum 10 ausgeleuchtet. In diesem zweiten Ausführungsbeispiel ist die Aktivierung der Leuchtmittel 8 rein beispielhaft durch das Umlegen eines Schalters (nicht dargestellt) bewirkbar. Leuchtmittel 8 in erfindungsgemäß ausgeführten Nasszellen 20 können aber auch auf beliebige andere Art und Weise aktivierbar sein, beispielsweise automatisch mit der Öffnung der Tür oder auf ganz andere Weise.

In diesem zweiten Ausführungsbeispiel weist die Nasszelle 20 ferner einen optionalen Luftauslass 22 für Fortluft sowie ein optionales Umluftelement 24 auf, mittels welchem ein Luftstrom innerhalb des Innenraums 10 der Nasszelle 20 erzeugbar ist. Der Luftauslass 22 ist in diesem zweiten Ausführungsbeispiel rein beispielhaft in einer Seitenwand 6 der Nasszelle 20 angeordnet und über einen optionalen Fortluftkanal 35 mit dem Äußeren der Nasszelle 20 verbunden. Innerhalb des Fortluftkanals 35 ist ein optionaler Fortluftlüfter 34 angeordnet, über dessen Betrieb das Volumen an Luft, welches als Fortluft aus dem Innenraum 10 der Nasszelle 20 ausgestoßen wird, regelbar ist. Über den Luftauslass 22 innerhalb der Nasszelle 20 kann ein Unterdruck im Innenraum 10 der Nasszelle 20 erzeugt werden, welcher verhindert, dass Luft aus dem Innenraum 10 der Nasszelle 20 in das Schienenfahrzeug abströmt. Im Gegensatz dazu strömt auf Grund des Unterdrucks Luft aus dem Fahrgastraum in den Innenraum 10 der Nasszelle 20.

Das Umluftelement 24 ist in diesem Ausführungsbeispiel rein beispielhaft als Umluftheizer 25 ausgeführt, welcher einen Umluftkanal 26 und ein darin angeordnetes Heizelement 23 umfasst. Es können jedoch auch andere Arten von Umluftelementen 24 in erfindungsgemäßen Nasszellen 20 zum Einsatz kommen, welche auch ohne oder mit einem anderen Heizelement 23 ausgeführt sein können. Beispielsweise können auch andere eine Umluft innerhalb des Innenraums 10 der Nasszelle 20 generierende Elemente wie Lüfter beziehungsweise Ventilatoren zur Anwendung gelangen. In diesem Ausführungsbeispiel umfasst der Umluftheizer 25 eine in der Decke 2 der Nasszelle 20 angeordnete Ansaugöffnung 27, in welcher rein beispielhaft ein optionaler Sensor 36 angeordnet ist, mittels welchem die Temperatur der angesaugten Luft messbar ist. In einem unteren Bereich einer Seitenwand 6 der Nasszelle 20 ist eine Ausblasöffnung 28 vorgesehen. In anderen Ausführungsbeispielen erfindungsgemäßer Nasszellen 20 können sowohl die Ansaugöffnung 27 als auch die Ausblasöffnung 28 im Boden 4 der Nasszelle 20 oder auch in einer (anderen) Seitenwand 6 oder der Decke 2 der Nasszelle 20 angeordnet sein. Die Ausblasöffnung 28 sowie die Ansaugöffnung 27 sind über den Umluftkanal 26 luftleitend miteinander verbunden, wobei der Umluftkanal 26 am Innenraum 10 der Nasszelle 20 vorbeigeführt ist, also nicht durch den Innenraum 10 der Nasszelle 20 geführt ist. Das Heizelement 23 ist in diesem zweiten Ausführungsbeispiel rein beispielhaft spiralförmig ausgeführt und in den Umluftkanal 26 eingefasst. Es können allerdings auch andere Heizelemente 23 in erfindungsgemäßen Nasszellen 20 zum Einsatz kommen, welche sich beispielsweise auch außerhalb des Umluftkanals 26 befinden können. Zwischen dem Heizelement 23 und der Ausblasöffnung 28 ist ein Kanallüfter 33 verbaut, über welchen die Luftzirkulation durch den Umluftkanal 26 generiert werden kann. Der Kanallüfter 33 kann allerdings auch an anderer Stelle innerhalb des Umluftkanals 26 angeordnet sein. Es können ferner auch erfindungsgemäße Nasszellen 20 mit Umluftheizern 25 ganz ohne Kanallüfter 33 ausgeführt werden.

Mittels des Sensors 36 wird in Abhängigkeit von dem Ergebnis der Messung der Temperatur ein Betriebssignal für das Heizelement 23 generiert und an selbiges übermittelt. Weist die Luft einen Temperaturwert auf, welcher unterhalb der vorbestimmten, gewünschten Betriebstemperatur innerhalb der Nasszelle 20 liegt, wird das Heizelement 23 in Betrieb genommen. Durch die Inbetriebnahme des Kanallüfters 33 wird Luft über die Ansaugöffnung 27 aus einem der Decke 2 der Nasszelle 20 nahen Bereich angesaugt, an dem Heizelement 23 vorbeigeführt, durch das Heizelement 23 erwärmt und über die Ausblasöffnung 28 im Bereich des Bodens 4 der Nasszelle 20 wieder ausgeblasen. Dadurch entsteht im Innenraum 10 der Nasszelle 20 ein Luftstrom, welcher sich im Wesentlichen vom Boden 4 der Nasszelle 20 zur Decke 2 derselben hin erstreckt und in Figur 2 über Pfeile angedeutet ist. Unter anderem durch die oben erwähnten Türspalte 12 dringt Luft von außerhalb der Nasszelle 20 in den Innenraum 10 derselben ein und nimmt an der Luftzirkulation beziehungsweise dem Luftkreislauf teil, während über den Fortluftkanal 35 Luft aus der Luftzirkulation beziehungsweise aus dem Luftkreislauf austritt. In diesem Ausführungsbeispiel wird das Umluftelement 24 kontinuierlich betrieben, so dass ein hoher Luftreinheitsgrad erzielt wird. Es können aber auch erfindungsgemäße Nasszellen 20 ausgeführt werden, bei welchen das Umluftelement 24 nur in vorbestimmten Intervallen oder auf eine Aktion des Nutzers hin betrieben wird. Auch können erfindungsgemäße Nasszellen 20 mit Umluftheizern 24 realisiert werden, die mindestens ein Heizelement 23 aufweisen, dessen Betriebsmodalitäten von den oben beschriebenen abweichen, dessen Inbetriebnahme also beispielsweise nicht von der Unterschreitung einer vorbestimmten Temperatur abhängig, sondern auf andere Art und Weise geregelt ist.

Innerhalb der Nasszelle 20 ist ein photokatalytisches Element 1 vorgesehen, welches bei Aktivierung mittels Licht luftreinigende Stoffe freisetzt. In diesem zweiten Ausführungsbeispiel ist das photokatalytische Element 1 als Deckenelement 32 beziehungsweise als Verkleidungsteil ausgeführt, welches unmittelbar unterhalb der Decke 2 der Nasszelle 20 angebracht ist. Genauer ausgedrückt umfasst das photokatalytische Element 1 ein luftdurchlässiges sowie lichtdurchlässiges Gitter 15, welches zum Beispiel unmittelbar unterhalb der Decke 2 der Nasszelle 20 angeordnet ist und mittig ein Kunststoffelement 29 trägt. Alternativ kann das photokatalytische Element 1 eine Lichtdurchlässige beschichtete Platte für die Beleuchtung aufweisen oder auf einer solchen aufgebracht sein. Neben der Platte können Gitter für die Lüftung vorgesehen sein. Durch das Gitter und optional vorbei an der Leuchte kann ein Umluftstrom geleitet werden. In diesem zweiten Ausführungsbeispiel ist das Kunststoffelement 29 rein beispielhaft als eine transparente Platte ausgeführt, welche auf dem Gitter 15 aufliegt und lichtdurchlässig ist. Sowohl auf der den Leuchtmitteln 8, also auf der der Decke 2 der Nasszelle 20 zugewandten Seite der Platte, als auch auf der dem Boden 4 der Nasszelle 20 zugewandten Seite der Platte ist diese mit einer photokatalytischen Beschichtung 30 versehen, welche bei Aktivierung mittels Licht die luftreinigenden Stoffe beziehungsweise Radikale freisetzt. Durch die Anordnung unmittelbar unterhalb der Decke 2 der Nasszelle 20 ist das photokatalytische Element 1 somit derart innerhalb der Nasszelle 20 angeordnet, dass es mit Licht des Leuchtmittels 8 direkt bestrahlbar ist und von über den Lichteinlass 9, also über die Türspalte 12 in die Nasszelle 20 einfallendem Licht bestrahlt wird. Ferner wird die dem Boden 4 der Nasszelle 20 zugewandte Seite der Platte mit indirekter Strahlung der Leuchtmittel 8, also mit an den Seitenwänden 6 beziehungsweise dem Boden 4 oder an sonstigen Bauelementen der Nasszelle 20 reflektierte Strahlung bestrahlt. Da das photokatalytische Element 1 auch unmittelbar unterhalb der Ansaugöffnung 27 des Umluftelementes 24 positioniert beziehungsweise angeordnet ist, befindet es sich auch unmittelbar im mittels des Umluftelementes 24 erzeugbaren Luftstrom, so dass Luft aus der oben beschriebenen Luftzirkulation an dem photokatalytischen Element 1 vorbeigeführt und mit dem photokatalytischen Element 1 konfrontiert wird. Auf diese Weise wird die durch die Nasszelle 20 zirkulierende Luft von Viren, Bakterien, Gerüchen und Keimen gereinigt.

In diesem zweiten Ausführungsbeispiel umfasst die photokatalytische Beschichtung 30 photokatalytisches Titandioxid, welches bei einer Aktivierung durch Licht, also bei einer Bestrahlung mit Licht, reaktiven Sauerstoff beziehungsweise Sauerstoffradikale freisetzt. Entlang der derart beschichteten Kunststoffplatte geführte Luft wird somit permanent aufbereitet. Es können allerdings auch erfindungsgemäße Nasszellen 20 mit anders aufgebauten und anders zusammengesetzten photokatalytischen Elementen 1 realisiert werden. So muss das photokatalytische Element 1 beispielsweise nicht die Form einer Platte aufweisen. Ferner können photokatalytische Elemente 1 auch ohne Kunststoffelement 29 oder mit anderen Trägerbeziehungsweise Konstruktionselementen realisiert sein. Auch muss das photokatalytische Element 1 einer erfindungsgemäßen Nasszelle 20 kein Gitter 15 aufweisen und kann auf andere Art und Weise in der Nasszelle 20 befestigt sein. Beispielsweise kann eine photokatalytische Beschichtung 30 auch lediglich auf ein Bau- beziehungsweise Konstruktionselement der Nasszelle 20, beispielsweise auf die Decke 2 der Nasszelle 20, aufgesprüht sein und so das photokatalytische Element 1 bilden. Des Weiteren können auch andere photokatalytische, bei Aktivierung mittels Licht die Luft reinigenden Stoffe freisetzende Beschichtungen beziehungsweise Elemente zum Einsatz kommen, so dass das photokatalytische Element 1 kein Titandioxid umfassen muss.

Die Erfindung ermöglicht eine effiziente und energiesparende Kombination von Beleuchtung, Beheizung und Hygienisierung des Innenraums 10 einer Nasszelle 20. Durch die beidseitige photokatalytische Beschichtung 30 der transparenten Kunststoffplatte steht die doppelte Fläche der Platte für die Aufbereitung der Luft zur Verfügung. Auch die indirekte Beleuchtung innerhalb der Nasszelle 20 wird zur Aktivierung der Titandioxidschicht genutzt, so dass durch eine günstige Luftführung ein vorbestimmter, spezifizierter Volumenstrom an Luft gereinigt und gleichzeitig bedarfsabhängig erwärmt werden kann. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen im Rahmen der Ansprüche können vom Fachmann hieraus abgeleitet werden, ohne den Schutzumfang der Erfindung zu verlassen.

## Patentansprüche

1. Nasszelle (20) für ein Schienenfahrzeug, umfassend
- einen Innenraum (10), welcher zumindest teilweise durch eine Decke (2), einen Boden (4) und mindestens eine Seitenwand (6) begrenzt ist;
- mindestens ein Leuchtmittel (8) und/oder einen Lichteinlass (9) ;
**dadurch gekennzeichnet, dass**
- die Nasszelle (20) ein photokatalytisches Element (1) umfasst, welches dazu eingerichtet ist, bei Aktivierung mittels Licht luftreinigende Stoffe freizusetzen, wobei das photokatalytische Element (1) als Seiten- oder Deckenelement (32) ausgeführt und zwischen dem mindestens einen Leuchtmittel (8) und dem Innenraum der Nasszelle (20) angebracht ist.

2. Nasszelle (20) nach Anspruch 1, **dadurch gekennzeichnet, dass** das photokatalytische Element (1) derart innerhalb der Nasszelle (20) angeordnet ist, dass es mit Licht des Leuchtmittels (8) bestrahlbar ist und/oder von über den Lichteinlass (9) in die Nasszelle (20) einfallendem Licht bestrahlt wird.

3. Nasszelle (20) nach einem der vorhergehenden Ansprüche, **dadurch gekennzeichnet, dass** das photokatalytische Element (1) photokatalytisches Titandioxid umfasst, welches bei einer Aktivierung durch Licht reaktiven Sauerstoff freisetzt.

4. Nasszelle (20) nach einem der vorhergehenden Ansprüche, wobei die Nasszelle (20) ferner einen Luftauslass (22) für Fortluft sowie ein Umluftelement (24) umfasst, mittels welchem ein Luftstrom innerhalb des Innenraums (10) der Nasszelle (20) erzeugbar ist.

5. Nasszelle (20) nach Anspruch 4, **dadurch gekennzeichnet, dass** das photokatalytische Element (1) ferner derart innerhalb der Nasszelle (20) angeordnet ist, dass ein mittels des Umluftelementes (24) erzeugter Luftstrom auf das photokatalytische Element (1) trifft.

6. Nasszelle (20) nach Anspruch 4 oder 5, **dadurch gekennzeichnet, dass** das Umluftelement (24) als Umluftheizer (25) ausgeführt ist, welcher einen Umluftkanal (26) umfasst, wobei über den Umluftkanal (26) eine Ansaugöffnung (27) in der Decke (2) der Nasszelle (20) mit einer Ausblasöffnung (28) im Boden (4) oder in der mindestens einen Seitenwand (6) der Nasszelle (20) luftleitend verbunden ist.

7. Nasszelle (20) nach einem der vorhergehenden Ansprüche, **dadurch gekennzeichnet, dass** das photokatalytische Element (1) ein Kunststoffelement (29) umfasst, welches mit einer photokatalytischen Beschichtung (30) versehen ist.

8. Nasszelle (20) nach Anspruch 7, **dadurch gekennzeichnet, dass** das Kunststoffelement (29) transparent oder im Wesentlichen lichtdurchlässig ist.

9. Nasszelle (20) nach einem der vorhergehenden Ansprüche, **dadurch gekennzeichnet, dass** das photokatalytische Element (1) die Form einer Platte aufweist.

10. Nasszelle (20) nach Anspruch 9, **dadurch gekennzeichnet, dass** die Platte an mindestens einer Seite mit der photokatalytischen Beschichtung (30) versehen ist.

11. Nasszelle (20) nach einem der vorhergehenden Ansprüche, **dadurch gekennzeichnet, dass** das photokatalytische Element (1) als Deckenelement (32) ausgeführt und in oder unmittelbar unterhalb der Decke (2) der Nasszelle (20) angebracht ist.

12. Nasszelle (20) nach Anspruch 11, **dadurch gekennzeichnet, dass** das mindestens eine Leuchtmittel (8) in oder unmittelbar unterhalb der Decke (2) der Nasszelle (20) angebracht ist.

13. Schienenfahrzeug mit einer Nasszelle (20) nach einem der Ansprüche 1 bis 12.

## Claims

1. Wet room (20) for a rail vehicle, comprising
- an interior (10), which is at least partly delimited by a ceiling (2), a floor (4) and at least one side wall (6),
- at least one lighting means (8) and/or a light-admitting structure (9),
**characterized in that**
- the wet room (20) comprises a photocatalytic element (1), which is designed to release air-purifying substances when activated by means of light, wherein the photocatalytic element (1) is configured as a side or ceiling element (32) and is fitted between the at least one lighting means (8) and the interior of the wet room (20).

2. Wet room (20) according to Claim 1, **characterized in that** the photocatalytic element (1) is arranged within the wet room (20) in such a way that it can be irradiated with light from the lighting means (8) and/or is irradiated by light entering the wet room (20) by way of the light-admitting structure (9).

3. Wet room (20) according to one of the preceding claims, **characterized in that** the photocatalytic element (1) comprises photocatalytic titanium dioxide, which releases reactive oxygen when activated by light.

4. Wet room (20) according to one of the preceding claims, wherein the wet room (20) also comprises an air outlet (22) for exhaust air and also an air circulating element (24), by means of which an air stream can be produced within the interior (10) of the wet room (20).

5. Wet room (20) according to Claim 4, **characterized in that** the photocatalytic element (1) is also arranged within the wet room (20) in such a way that an air stream produced by means of the air circulating element (24) impinges on the photocatalytic element (1).

6. Wet room (20) according to Claim 4 or 5, **characterized in that** the air circulating element (24) is configured as an air circulating heater (25), which comprises an air circulating duct (26), wherein by way of the air circulating duct (26) an intake opening (27) in the ceiling (2) of the wet room (20) is connected in an air-conducting manner to a blow-out opening (28) in the floor (4) or in the at least one side wall (6) of the wet room (20).

7. Wet room (20) according to one of the preceding claims, **characterized in that** the photocatalytic element (1) comprises a plastic element (29), which is provided with a photocatalytic coating (30).

8. Wet room (20) according to Claim 7, **characterized in that** the plastic element (29) is transparent or substantially translucent.

9. Wet room (20) according to one of the preceding claims, **characterized in that** the photocatalytic element (1) has the form of a panel.

10. Wet room (20) according to Claim 9, **characterized in that** the panel is provided with the photocatalytic coating (30) on at least one side.

11. Wet room (20) according to one of the preceding claims, **characterized in that** the photocatalytic element (1) is configured as a ceiling element (32) and is fitted in or directly under the ceiling (2) of the wet room (20).

12. Wet room (20) according to Claim 11, **characterized in that** the at least one lighting means (8) is fitted in or directly below the ceiling (2) of the wet room (20).

13. Rail vehicle with a wet room (20) according to one of Claims 1 to 12.

## Revendications

1. Bloc (20) sanitaire d'un véhicule ferroviaire, comprenant
- un espace (10) intérieur, qui est délimité, au moins en partie, par un plafond (2), un plancher (4) et au moins une paroi (6) latérale ;
- au moins un moyen (8) d'éclairage et/ou une entrée (9) de lumière ;
**caractérisé en ce que**
- le bloc (20) sanitaire comprend un élément (1) photocatalytique conçu pour, lorsqu'il est activé au moyen de lumière, dégager des substances épurant l'air, l'élément (1) photocatalytique étant réalisé sous la forme d'un élément (32) latéral ou de plafond et étant monté entre le au moins un moyen (8) d'éclairage et l'espace intérieur du bloc (20) sanitaire.

2. Bloc (20) sanitaire suivant la revendication 1, **caractérisé en ce que** l'élément (1) photocatalytique est disposé à l'intérieur du bloc (20) sanitaire de manière à pouvoir être exposé à de la lumière du moyen (8) d'éclairage et/ou de manière à être exposé à de la lumière entrant par l'entrée (9) de lumière dans le bloc (20) sanitaire.

3. Bloc (20) sanitaire suivant l'une des revendications précédentes, **caractérisé en ce que** l'élément (1) photocatalytique comprend du dioxyde de titane photocatalytique, qui, lorsqu'il est activé par de la lumière, dégage de l'oxygène réactif.

4. Bloc (20) sanitaire suivant l'une des revendications précédentes, dans lequel le bloc (20) sanitaire comprend, en outre, une sortie (22) d'air pour de l'air d'échappement, ainsi qu'un élément (24) d'air recirculé, au moyen duquel un courant d'air peut être produit à l'intérieur de l'espace (10) intérieur du bloc (20) sanitaire.

5. Bloc (20) sanitaire suivant la revendication 4, **caractérisé en ce que** l'élément (1) photocatalytique est disposé, en outre, à l'intérieur du bloc (20) sanitaire de manière à ce qu'un courant d'air, produit au moyen de l'élément (24) pour de l'air recirculé, arrive sur l'élément (1) photocatalytique.

6. Bloc (20) sanitaire suivant la revendication 4 ou 5, **caractérisé en ce que** l'élément (24) pour de l'air recirculé est réalisé sous la forme d'un dispositif (25) de chauffage d'air recirculé, qui comprend un conduit (26) pour de l'air recirculé, dans lequel, par le conduit (26) pour de l'air recirculé, une ouverture (27) d'aspiration dans le plafond (2) du bloc (20) sanitaire communique de manière à conduire de l'air avec un orifice (28) d'insufflation dans le plancher (4 ) ou dans la au moins une paroi (6) latérale du bloc (20) sanitaire.

7. Bloc (20) sanitaire suivant l'une des revendications précédentes, **caractérisé en ce que** l'élément (1) photocatalytique comprend un élément (29) en matière plastique, qui est pourvu d'un revêtement (30) photocatalytique.

8. Bloc (20) sanitaire suivant la revendication 7, **caractérisé en ce que** l'élément (29) en matière plastique est transparent ou sensiblement perméable à la lumière.

9. Bloc (20) sanitaire suivant l'une des revendications précédentes, **caractérisé en ce que** l'élément (1) photocatalytique a la forme d'une plaque.

10. Bloc (20) sanitaire suivant la revendication 9, **caractérisé en ce que** la plaque est pourvue, sur au moins une face, du revêtement (30) photocatalytique.

11. Bloc (20) sanitaire suivant l'une des revendications précédentes, **caractérisé en ce que** l'élément (1) photocatalytique est réalisé sous la forme d'un élément (32) de plafond et est monté dans le plafond (2) du bloc (20) sanitaire ou juste en dessous.

12. Bloc (20) sanitaire suivant la revendication 11, **caractérisé en ce que** le au moins un moyen (8) d'éclairage est monté dans le plafond (2) du bloc (20) sanitaire ou juste en dessous.

13. Véhicule ferroviaire ayant un bloc (20) sanitaire suivant l'une des revendications 1 à 12.
